# FASCICULE DE BREVET EUROPEEN

(11) **EP 2 537 299 B1**
(45) Date de publication et mention de la délivrance du brevet: **23.03.2022**
(21) Numéro de dépôt: 11707693.5
(22) Date de dépôt: 07.02.2011
(51) Int. Cl.: H04L 12/701, H04L 12/715, H04L 12/751, H04L 12/46, H04L 12/741

(54) **GESTION DE RESEAUX PRIVES VIRTUELS**
VERWALTUNG PRIVATER VIRTUELLER NETZWERKE
MANAGEMENT OF PRIVATE VIRTUAL NETWORKS

(30) Priorité: 16.02.2010 FR 1051097
(43) Date de publication de la demande: 26.12.2012
(73) Titulaire: Transpacific IP Group Limited, Grand Cayman KY1-1001 (KY)
(72) Inventeur: BEN-HOUIDI, Zied, F-75020 Paris (FR); MEULLE, Mickael, F-75020 Paris (FR)
(74) Mandataire: Eidelsberg, Olivier Nathan
(86) Numéro de dépôt international: PCT/FR2011/050240
(87) Numéro de publication internationale: WO 2011/101575

(56) Documents cités:
- US-A1- 2007 260 746
- US-A1- 2008 170 573
- KOMPELLA (EDITOR) JUNIPER NETWORKS K: "Layer 2 VPNs Over Tunnels; draft-kompella-l2vpn-l2vpn-01.txt", IETF STANDARD-WORKING-DRAFT, INTERNET ENGINEERING TASK FORCE, IETF, CH, no. 1, 1 janvier 2006 (2006-01-01), XP015044304, ISSN: 0000-0004

## Description

La présente invention est relative au domaine des télécommunications, et plus particulièrement aux réseaux de type VPN (pour 'Virtual Private Network') ou encore réseaux privés virtuels.

Un réseau privé virtuel VPN correspond à un réseau local étendu obtenu par l'interconnexion de différents réseaux locaux distants entre eux par l'intermédiaire d'une infrastructure en général gérée par un opérateur. Cette infrastructure est un système de communication qui peut être partagé par différents réseaux privés virtuels VPN, tout en préservant un niveau de sécurité et de séparation de ces VPN entre eux. A cet effet, il est prévu de relier les différents réseaux locaux, ou sites, d'un même VPN, en utilisant des liens virtuels, ou encore tunnels, via le système partagé utilisé. Un tunnel correspond en quelque sorte à une encapsulation de données à transmettre.

Une architecture MPLS (pour 'MultiProtocol Label Switching') est classiquement utilisée pour la mise en place de tel système partagé pour réseaux VPN. Au sein de cette architecture qui permet le transport des communications entre les différents sites d'un même VPN, il est classique de mettre en œuvre un protocole de routage de type BGP (pour 'Border Gateway Protocol') tel que défini par le document de l'IETF RFC 4364 (BGP/MPLS IP Virtual Private Networks). Un tel réseau IP/VPN BGP/MPLS permet une mise en œuvre complète pour des réseaux VPNs.

Dans ce type de réseau, un opérateur peut gérer le système partagé et offrir un service de réseau VPN de connectivité de niveau 3 (c'est-à-dire de type IP (pour 'Internet Protocol')) à des clients qui ont des sites distants. Ainsi, entre les réseaux IP (ou sites) d'un même client, il est prévu d'établir des liaisons IP virtuelles via le système de l'opérateur. La ou les topologies VPN de chaque client sont déterminées par ce dernier et elles sont configurées par l'opérateur sur les équipements de type BGP du système. Le maillage entre sites dans la topologie VPN d'un client peut par exemple correspondre à un réseau complètement maillé. Tel est le cas lorsque chaque site VPN est relié par une liaison virtuelle à chacun des autres sites. II peut aussi former un réseau en étoile. Tel est le cas lorsque chaque site est relié à un site central par liaison IP virtuelle.

Ce type de réseau repose sur un principe d'annonce de routes par diffusion d'information au sein de tout le système partagé. Plus précisément, selon un protocole de routage de type BGP, comme le protocole MP-BGP pour « MultiProtocol BGP », pour chaque site d'un VPN, un routeur de bordure annonce les routes pour joindre ce site à tout le système, c'est-à-dire à tous les autres routeurs de bordure du système. Un routeur de bordure appartient à l'infrastructure de l'opérateur et est l'interface des sites VPN.

En outre, la mise en œuvre de la diffusion de ces annonces de route repose sur un maillage particulier au sein du système, qui peut être soit un maillage complet entre tous les routeurs de bordure, soit un maillage complet entre des réflecteurs de route (RR).

Ces principes sont aisément applicables dans un système BGP/MPLS de taille raisonnable. Toutefois à partir d'un certain nombre de sites VPNs gérés, le fait de transmettre les annonces de route au sein de tout le système peut surcharger le réseau globalement, et peut induire une certaine lourdeur de traitement, notamment en cas de mise à jour du routage. Par conséquent, lors de changements de route il est possible qu'une nouvelle convergence du routage prenne trop de temps et engendre des pertes de paquets.

La présente invention vise à améliorer la situation. De US2008/170573A1 et de Kompella(Editor) Juniper Networks K : « Layer 2 VPNs Over Tunnels; draft-kompella-12vpn-12vpn-01.txt", IETF STANDARD-WORKING-DRAFT, INTERNET ENGINEERING TASK FORCE, IETF, CH, no.1, 1 janvier 2006 (2006-01-01), XP015044304, ISSN: 0000-0004, il est connu des procédés de routage dans des systèmes de transmission comprenant une pluralité de routeurs de bordure et gérant une pluralité de réseaux virtuels, chacun reliant plusieurs réseaux distants entre eux.

Un premier aspect de l'invention propose un procédé de routage suivant la revendication 1.

On entend ici par les termes 'système de transmission', un réseau offrant un service qui permet la mise en place d'une pluralité de réseaux virtuels, de type VPN. Ainsi, le système de transmission peut être géré par un opérateur pour offrir à un client, qui dispose de réseaux distants, de les relier via un réseau virtuel de type VPN.

On entend par les termes 'réseau distant' tout type de site d'un client, c'est-à-dire tout type de réseau de transmission de paquets, par exemple de type IP, que l'on peut relier avec un autre ou plusieurs autres sites client via le système de transmission pour former un VPN de ce client.

On entend par les termes 'détection d'un changement de route', aussi bien une réception d'un message d'annonce indiquant un changement de route qu'un changement d'une route locale effectué par configuration. Le changement de route est détecté pour un réseau distant directement connecté au routeur de bordure considéré. A l'étape /a /, tout type de message d'annonce selon un protocole de routage adapté pour indiquer un changement de route, c'est-à-dire une nouvelle route à prendre en compte pour le routage dans le VPN considéré ou une route à supprimer dans le routage appliqué dans ce VPN, peut être utilisé. Le protocole de routage adapté peut être BGP, OSPF (pour 'Open Shortest Path First'), ISIS (pour 'Intermediate System to Intermediate System'),...

A l'étape /c/, on peut prévoir un mécanisme d'acquittement pour permettre à un routeur de bordure de s'assurer que les changements de route qu'il a transmis ont bien été reçus.

Dans ce contexte, il est avantageusement prévu qu'un routeur de bordure du système de transmission gère une table de topologie sur la base de laquelle il peut déterminer à quel(s) autre(s) routeur(s) de bordure du réseau et les réseaux distants correspondants (via les identifiants), il doit transmettre un changement de route provenant d'un réseau distant qui lui est directement connecté. II est prévu que les réseaux distants soient identifiés au niveau d'un routeur de bordure auquel ils sont reliés directement par un identifiant de réseau distant. Plus précisément, cet identifiant de réseau distant identifie une ressource particulière, interne au routeur de bordure considéré, et en charge de l'interface avec le réseau distant.

Plus précisément, une telle table de topologie d'un routeur de bordure, selon un mode de réalisation de la présente invention, indique un ou plusieurs routeurs de bordure adjacents pour un réseau virtuel donné, c'est-à-dire une liste de routeurs de bordure qui lui sont reliés pour la topologie du réseau virtuel considéré, ainsi que des identifiants de réseau distant correspondants. En fait, l'ensemble des tables de topologie gérées par les routeurs de bordure du réseau représente les topologies des différents VPNs mis en place dans le système partagé considéré.

Aucune limitation n'est attachée au type d'identifiant de réseau distant utilisé. Il s'agit ici de permettre aux autres routeurs de bordure d'identifier la ressource particulière en charge de l'interface avec un réseau distant donné pour un VPN donné. En effet, un réseau distant d'un VPN donné se connecte au système de transmission via un routeur de bordure donné. Ainsi, ce routeur de bordure héberge une gestion d'interface avec ce réseau distant. Les identifiants de réseau distant permettent d'identifier cette ressource particulière au sein du système de transmission.

Grâce à une telle table de topologie au niveau d'un routeur de bordure, il est avantageusement possible de réduire le nombre de messages émis dans le réseau de transmission lors d'un changement de route. En effet, le changement de route peut alors être transmis uniquement à un ou plusieurs routeurs de bordure adjacents, c'est-à-dire les routeurs qui lui sont adjacents au sens de la topologie du VPN concerné, en indiquant les identifiants de réseau distant correspondants, c'est-à-dire qui correspondent au VPN considéré.

On est en mesure d'optimiser, de manière simple et efficace, la distribution de l'information de changement de route, qui peut être via un message d'annonce de routes, au sein d'un tel réseau puisqu'une annonce de route n'est transmise qu'aux équipements concernés par cette route, contrairement à ce qui est prévu dans un réseau de type BGP/MPLS de l'art antérieur, dans lequel ces annonces de route sont diffusées à l'ensemble des routeurs de bordure.

A cet effet, dans un tel contexte, il est prévu de créer les tables de topologie du ou des VPNs gérés au niveau d'un routeur de bordure dans une phase préliminaire en amont de toute transmission d'annonce de route, puis de les maintenir à jour en fonction des évolutions des topologies réelles des VPNs considérés. On peut prévoir de créer des VPNs en gérant des tunnels virtuels selon différentes technologies telles que par exemple MPLS, IPsec (pour 'IP security') GRE (pour 'Generic Routing Encapsulation') etc.... Ces tunnels virtuels représentent la topologie des VPNs des clients. Aucune limitation n'est attachée au type de technologie utilisée pour la création de ces tunnels virtuels.

Dans cette phase de gestion de table de topologie, chaque routeur de bordure apprend la liste de ses routeurs adjacents pour chaque VPN qui le concerne, c'est-à-dire pour chaque VPN pour lequel il représente un accès au système pour un des sites du VPN, en association avec les identifiants de réseau distant correspondants.

Pour construire et mettre à jour les tables de topologie, on peut par exemple prévoir de mettre en œuvre des principes similaires à ceux qui sont mis en œuvre dans un réseau classique de type VPN IP BGP/MPLS, utilisant un protocole de type MP-BGP notamment. Une route selon le protocole MP-BGP est telle qu'elle permette d'atteindre tous les routeurs de bordure du réseau de l'opérateur.

Dans un mode de réalisation de la présente invention, il est ainsi avantageusement prévu de séparer une étape de création de topologie VPN d'une étape de distribution des annonces de route permettant de joindre les différents sites entre eux.

II est important de noter qu'en ne transmettant les messages d'annonce de route qu'aux routeurs de bordure qui sont concernés par cette annonce, on est en mesure de réduire le temps de convergence de routage lorsqu'un changement de route est annoncé, comme une suppression ou un ajout de route. Ainsi, en réduisant de convergence, on est mesure d'éviter des pertes de paquets.

Grâce à de telles caractéristiques, chaque routeur de bordure du réseau ne reçoit que les messages dont il a besoin car les messages sont transmis dans des tunnels par VPN indiqués préalablement dans les tables de topologie.

Un tel procédé de routage est de ce fait particulièrement adapté pour un système partagé gérant un nombre important de VPNs.

Il convient de noter que l'étape de création de tunnels virtuels repose sur une diffusion générale de messages dans le système partagé, alors que l'étape de mise à jour de routage est réalisée avantageusement par transmission ciblée aux équipements concernés. Or, comme la topologie VPN est généralement à mettre à jour moins fréquemment que le routage, ce mode de réalisation est particulièrement avantageux à mettre en œuvre et permet de réduire de manière conséquente le trafic lié au routage.

On peut prévoir que la table de topologie d'un réseau virtuel au niveau d'un routeur de bordure est mise à jour selon un protocole de topologie en fonction de la configuration du réseau virtuel, ce protocole de topologie comprenant un signal de diffusion de topologie indiquant un routeur de bordure par lequel ce réseau distant est connecté au système de transmission et l'identifiant de réseau distant correspondant.

Ce protocole de topologie permet de diffuser les informations sur les tunnels virtuels correspondant à la topologie d'un VPN client selon MPLS, IPsec, ou encore GRE par exemple.

Dans un mode de réalisation de la présente invention, le routeur de bordure gère en outre une table de routage par réseau virtuel indiquant des informations de chemins disponibles pour transmettre des paquets vers les réseaux distants dudit réseau virtuel. Cette table de routage est mise à jour sur réception d'un changement de route transmis par un autre routeur de bordure, le changement de route indiquant si un chemin est à ajouter, supprimer ou modifier dans la table de routage.

Ainsi, chaque routeur de bordure d'un VPN est apte à router des paquets reçus au sein d'un VPN sur la base des informations stockées et maintenues à jour dans ses tables de routage. II gère donc au moins une table de routage par VPN qu'il met à jour sur la base des annonces de route reçues au sein d'un même VPN via les tunnels virtuels de topologie.

Un changement de route relatif à un réseau distant qui est directement connecté au routeur de bordure peut être détecté selon un protocole de routage utilisé entre le réseau distant et le routeur de bordure. Un tel changement de route pour les routes vers le réseau distant considéré est annoncé vers les routeurs de bordure adjacents. II convient de noter que ce type d'annonce est postérieur à une phase d'apprentissage de la topologie selon un mode de réalisation de la présente invention.

Ainsi, il est prévu que les tables de routage gérées par un routeur de bordure sont mises à jour selon deux voies. D'une part, elles sont mises à jour selon un protocole de routage de type PE-CE (c'est-à-dire entre réseau distant (CE (pour 'Customer Edge') désignant un routeur passerelle du réseau distant) et routeur de bordure PE (pour 'Provider Edge')) et d'autre part elles sont mises à jour par transmission des changements de routes au sein du système de transmission par les différents routeurs de bordure à l'étape /c/.

Un deuxième aspect de la présente invention propose un routeur de bordure dans un système de transmission adapté pour mettre en œuvre un procédé de routage selon le premier aspect de la présente invention.

Un troisième aspect de la présente invention propose un système de transmission comprenant une pluralité de routeurs de bordure selon le deuxième aspect de la présente invention.

Un quatrième aspect de la présente invention propose un programme d'ordinateur comportant des instructions pour la mise en œuvre du procédé le premier aspect de la présente invention lorsque ce programme est exécuté par un processeur.

Un cinquième aspect de la présente invention propose un signal de diffusion de topologie dans un système de transmission selon le troisième aspect de la présente invention dans lequel chaque routeur de bordure gère une table de topologie indiquant, pour un réseau virtuel donné, un ou plusieurs routeurs de bordure adjacents, et pour un routeur de bordure adjacent, au moins un identifiant de réseau distant correspondant;
ledit signal de diffusion de topologie indiquant un routeur de bordure par lequel le réseau distant est connecté au système de transmission et un identifiant de réseau distant correspondant.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un système de transmission selon un mode de réalisation de la présente invention ;
- la figure 2 illustre les principales étapes d'un procédé de diffusion de routes selon un mode de réalisation de l'invention ;
- la figure 3 illustre une architecture d'un routeur de bordure selon un mode de réalisation de la présente invention ; et
- la figure 4 illustre une topologie d'un VPN selon un mode de réalisation de la présente invention ;
- la figure 5 illustre un exemple de mise en œuvre de table de topologie et de routage dans un système de transmission selon un mode de réalisation de la présente invention ; et
- la figure 6 illustre un routeur de bordure selon un mode de réalisation de la présente invention.

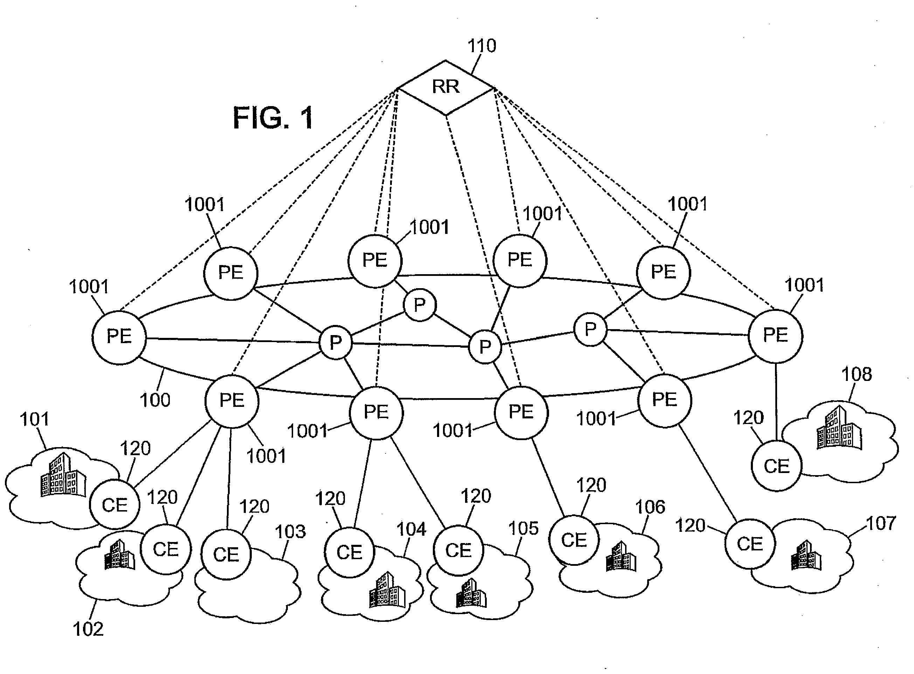

La figure 1 illustre un système de transmission selon un mode de réalisation de la présente invention. Un système de transmission 100 comprend plusieurs routeurs de bordure 1001 (ou PE pour 'Provider Edge' en anglais) qui peuvent être reliés à des sites client 101 à 108 respectivement, ou encore référencés en tant que réseaux distants. Dans l'exemple illustré en figure 1, les routeurs de bordure sont également reliés à un routeur RR dit route réflecteur (RR pour 'Route Reflector') 110 et à des routeurs P qui sont des routeurs de cœur du système.

On peut par exemple considérer que cette architecture est une architecture du type MPLS dans laquelle sont aisément mis en place des réseaux virtuels de type VPN offrant un service de connectivité de niveau 3 entre des réseaux distants de type IP 101 à 108. Les réseaux distants 101-108 utilisent des routeurs passerelle appelés routeurs CE 120 pour se relier au système de transmission 100, ou encore référencé réseau d'opérateur, via les routeurs de bordure PE 1001. Les routeurs PE 1001 utilisent ici par exemple un protocole de type MPLS pour transporter les communications entre les différents routeurs CE de sites appartenant à un même VPN.

Dans un mode de réalisation de la présente invention, dans un tel système 100 de type MPLS, les communications entre différents sites distants appartenant à un même VPN reposent sur le protocole MPLS. A cet effet, des tunnels MPLS sont mis en place via les routeurs P et les routeurs de bordure PE 1001 sur la base de tables de commutation, dites tables de commutation de labels, qui sont mises à jour selon un protocole de distribution de label de type LDP (pour 'Label Distribution Protocol' en anglais). La mise en place de ces tunnels de type MPLS au sein du réseau 100 ne fait pas l'objet de la présente invention. Aucune limitation n'est attachée à la présente invention au regard de cet aspect technique. On peut notamment prévoir de mettre en œuvre des technologies de type IP sec, GRE, etc....

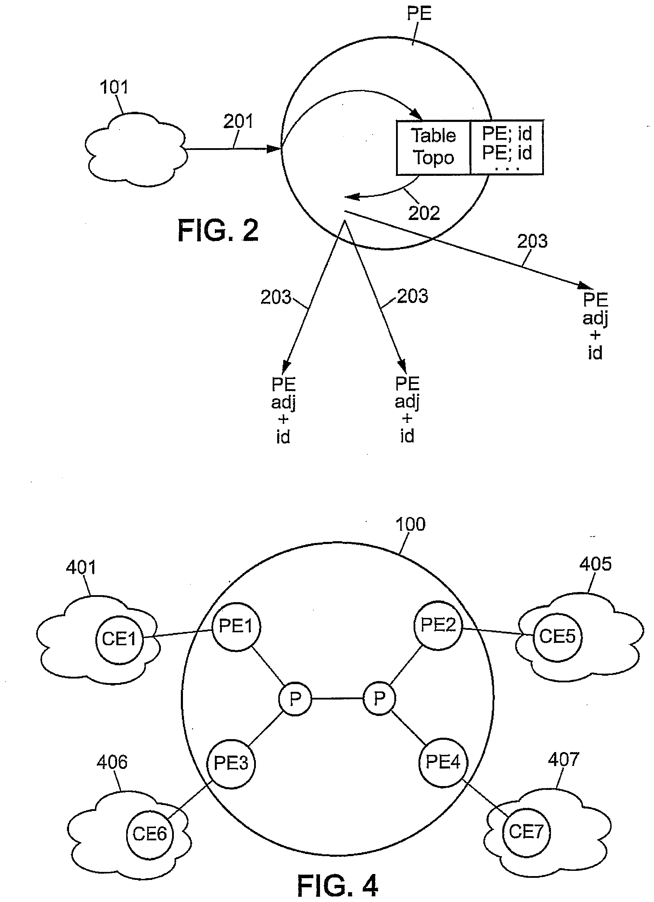

La figure 2 illustre les principales étapes d'un procédé de routage selon un mode de réalisation de la présente invention.

Dans un système de transmission 100 tel que celui illustré en figure 1, on prévoit de réaliser les étapes suivantes au niveau d'un routeur de bordure du réseau.

A une étape 201, on détecte un changement de route relatif à un réseau .distant, directement connecté au routeur de bordure considéré, appartenant à un réseau virtuel donné. Puis, à une étape 202, on détermine un ou plusieurs routeurs de bordure à qui il convient de transmettre ce message, en indiquant les identifiants de réseau distant correspondants.

Cette étape est avantageusement effectuée sur la base d'une table de topologie maintenue à jour au niveau du routeur de bordure de sorte à illustrer la topologie d'un ou plusieurs VPN qui transitent via ce routeur de bordure. Cette table de topologie est remplie en amont de cette étape de transmission d'annonce de route. Elle représente la topologie d'un VPN donné au niveau du routeur de bordure considéré. En ce sens, pour un VPN donné, elle liste les routeurs de bordure PE adjacents avec leur identifiant de réseau distant correspondant selon la topologie de ce VPN.

Ainsi, pour un VPN comprenant un site 101 qui est relié au système par un routeur de bordure PE1, un site 103 qui est relié au système par un routeur de bordure PE3 et un site 104 qui est relié au système par un routeur de bordure PE4, on peut prévoir que le PE1 ait une table de topologie indiquant notamment les PE3 et PE4 en tant que PE adjacents pour le VPN considéré.

Aucune limitation n'est attachée au mécanisme mis en œuvre pour remplir une telle table de topologie. Tout protocole de diffusion d'information peut être utilisé au sein du système de transmission considéré. Les informations diffusées dans un protocole de topologie selon un mode de réalisation de la présente invention sont fonction de la technologie utilisées pour construire les tunnels d'un réseau VPN. De manière générale, on peut prévoir de diffuser les informations suivantes :
- un identifiant du routeur de bordure émetteur du message de topologie,
- un identifiant du réseau distant connecté au niveau de ce routeur de bordure, cet identifiant local permettant d'identifier une entité de gestion, en charge de l'interface avec le réseau distant, et
- une information relative à la topologie du VPN, par exemple de façon similaire aux Route Targets dans des réseaux VPN en BGP MPLS, tels que définis dans le document de l'IETF RFC 4364.

En procédant ainsi, chaque routeur de bordure informe de manière générale par diffusion tous les autres routeurs de bordure du système de transmission considéré au sujet de tous les réseaux distants qui lui sont directement connectés selon la topologie d'un VPN donné, en indiquant un identifiant de réseau distant de chaque site client qui lui est directement connecté.

Dans le cas où un routeur de bordure gère une pluralité de VPNs, on peut prévoir que le routeur de bordure gère une table de topologie par VPN, ou encore une seule table de topologie contenant des informations de topologie de plusieurs VPNs.

Quoiqu'il en soit, une telle table de topologie au niveau d'un PE donné indique une liste de routeurs de bordure adjacents, ainsi que les identifiants de réseau distant correspondants, pour un réseau distant directement connecté à ce PE donné, dans un VPN.

Ainsi, lorsque le routeur de bordure détecte un changement de route depuis un site client, il détermine le VPN concerné, c'est-à-dire le VPN auquel appartient le site depuis lequel il a reçu l'annonce de route. Puis, grâce à la table de topologie, il identifie les routeurs de bordure, et les identifiants de réseau distant correspondants, qui lui sont adjacents et qui appartiennent également à ce VPN. Ensuite, à une étape 203, il transmet le changement de route à ces routeurs de bordure adjacents identifiés dans la table de topologie, et associés aux identifiants de réseau distant correspondants.

De manière plus précise, un routeur de bordure gère une interface par réseau distant connecté directement à lui, c'est à dire par réseau distant pour lequel il est un point d'entrée au système de transmission. Chacune de ces interfaces correspond à une interface d'un routeur de bordure PE avec un routeur, dit routeur passerelle CE, du réseau distant. Lors de la création et du maintien de tables de topologie selon un mode de réalisation de la présente invention, il s'agit de relier ces interfaces PE-CE de chaque topologie VPN. Les routeurs PE échangent entre eux des informations relatives à ces interfaces. Une étape de mise à jour de table de topologie permet de créer des tunnels virtuels entre toutes les interfaces connectant des sites qui sont reliés ensemble dans une même topologie VPN.

Pour créer initialement de telles tables de topologie, on peut prévoir que chaque interface d'un routeur de bordure qui connecte un site VPN est configurée par un opérateur du système de transmission en indiquant des routes cibles (ou RTs pour 'Route Target') importés et des routes cibles RTs exportés, de façon similaire à ce qui est spécifié pour des réseaux VPN BGP MPLS. Selon l'invention, un routeur PE annonce à tous les autres routeurs PE des informations permettant d'identifier chacune de ses interfaces (en indiquant un identifiant (ou label) de PE, et un identifiant (ou label interne) d'interface) ainsi que les RT importés. Ce comportement diffère de celui prévu pour les réseaux VPN BGP MPLS dans lesquels un routeur PE annonce aux autres routeurs les RT exportés). Grâce à la présente invention, il n'est plus requis d'inonder le système par les routes contenant les RT exportées.

L'annonce de ces informations permet à chaque routeur PE de déterminer, pour chacune de ses interfaces locales vers un site, quelles sont les interfaces distantes avec lesquelles établir une liaison virtuelle pour le VPN considéré.

Grâce à ces tables de topologie, la transmission d'annonce de route dans le réseau est avantageusement ciblée et permet astucieusement d'éviter d'inonder le réseau par l'émission de messages qui ne sont in fine utiles qu'à une partie seulement des routeurs de bordure du réseau, plus précisément à ceux qui font partie du même VPN.

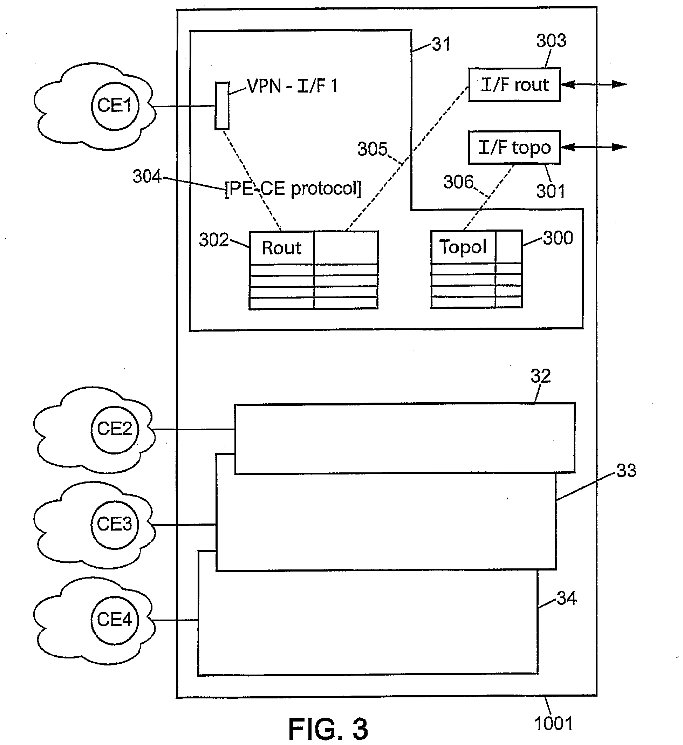

La figure 3 illustre une architecture d'un routeur de bordure selon un mode de réalisation de la présente invention.

Un tel routeur de bordure 1001 permet de relier au système les routeurs de réseaux distants CE1 à CE4 qui appartiennent respectivement aux réseaux VPN1, VPN2, VPN3 et VPN4.

Dans ce mode de réalisation de la présente invention, il est prévu de mettre en œuvre une unité de gestion de topologie et de routage par interface avec un routeur client au niveau du routeur PE considéré. Bien entendu, il est aisé de prévoir une entité de gestion de topologie et une entité de gestion de routage de manière séparée au niveau d'un routeur de bordure à partir de ce qui suit.

Ainsi, dans l'exemple illustré, le routeur PE 1001 a une entité de gestion de topologie et de routage 31 qui est en charge de gérer le VPN 1 et l'interface avec le routeur CE1, une entité de gestion 32 qui est en charge de gérer le VPN 2 et l'interface avec CE2, une entité de gestion 33 qui est en charge de gérer le VPN 3 et l'interface avec CE3 et une entité de gestion 34 qui est en charge de gérer le VPN 4 et l'interface avec CE4.

La topologie du.VPN1 considéré à titre illustratif est illustrée en figure 4. Il relie les réseaux distants 401, 405, 406 et 407. Plus précisément, le réseau distant 401 est relié au système 100 via son routeur client CE1 et le routeur de bordure PE1. Le réseau distant 405 est relié au système 100 via son routeur client CE5 et le routeur de bordure PE2. Le réseau distant 406 est relié au système 100 via son routeur client CE6 et le routeur de bordure PE3. Le réseau distant 407 est relié au système 100 via son routeur client CE7 et le routeur de bordure PE4.

L'entité de gestion 31 maintient une table de topologie 300 correspondant à la topologie du VPN 1, pour lequel le PE1 considéré gère l'interface avec le routeur distant CE1 du réseau 401. Cette table de topologie liste les routeurs PE qui sont adjacents au PE1, ou plus particulièrement la liste des unités de gestion de topologie et de routage adjacentes, au sens de la topologie du réseau VPN1. Ainsi, dans l'exemple illustré en figure 4, la table de topologie gérée par PE1 pour son interface avec le réseau 401 indique, en tant que routeurs de bordure adjacents, la liste suivante : PE2, PE6 et PE7, ou plus précisément l'unité de gestion du VPN1 sur PE2, l'unité de gestion du VPN1 sur PE6 et l'unité de gestion du VPN1 sur PE7.

Cette table de topologie 300 est mise à jour selon un protocole de topologie qui permet de diffuser dans le système de transmission les informations requises pour la mise à jour des tables de topologie des autres routeurs PEs du même VPN. A cet effet, le routeur PE1 comprend une interface 301 de topologie qui gère à la fois l'émission et la réception des messages de topologie selon une diffusion dans le système 100. Sur réception de message sur cette interface 301, une mise à jour 306 de la table de topologie 300 est prévue.

Cette table de topologie 300 est avantageusement consultée pour toute mise à jour de routage dans le VPN1.

Pour la gestion du routage, il est prévu que chaque entité de gestion d'un routeur PE gère, outre une table de topologie par VPN, une table de routage par VPN. Cette table de routage contient des informations sur les routes permettant de joindre les différents équipements d'un même réseau virtuel.

De telles tables de routage peuvent être similaires à celles qui sont utilisées dans un réseau de type BGP/MPLS (VRF RIB (pour 'Virtual Routing and Forwarding Routing Information Base')). Toutefois, lors de la mise à jour de telles tables, le mécanisme de transmission de l'information de routage au sein du VPN concerné repose sur la topologie telle qu'indiquée dans la table de topologie correspondante.

L'entité de gestion 31 comprend en outre une table de routage 302 qui peut être mise à jour 304 sur détection d'un changement de route relative au réseau distant 401. De tels messages peuvent être transmis selon un protocole adapté pour des échanges entre PE-CE sans qu'aucune limitation ne soit attachée au type de protocole utilisé. Puis, de telles annonces de route sont ensuite transmises au sein du système de transmission aux PEs adjacents, et les identifiants de réseau distant correspondants qui sont listés dans la table de topologie 300, tel que décrit précédemment.

La table de routage 302 peut également être mise à jour 305 sur réception de messages d'annonce de route reçus depuis des PEs adjacents au regard de la topologie du réseau VPN1. Une interface 303 est en charge de recevoir ces messages d'annonce de route depuis d'autres PEs d'un même VPN.

Dans un mode de réalisation de la présente invention, à chaque interface connectant un site VPN, on fait correspondre une entité de gestion d'interface qui a en charge des opérations relatives à cette interface.

Un protocole de routage selon un mode de réalisation de la présente invention peut correspondre à des messages comprenant les champs suivants :
- <ajout/suppression> ;
- <identifiant de site> ;
- <identifiant local de site pour le PE considéré>.

Le champ <ajout/suppression> indique si une route vers le site en question a été ajoutée dans l'annonce en tant que site joignable ou bien s'il n'est plus joignable.

Le champ <Site> indique un préfixe ou encore identifiant du réseau distant concerné.

Le champ <identifiant local de site pour PE considéré>, encore référencé <Interface locator>, indique une information permettant de joindre l'interface connectant le réseau distant considéré. En fait, l'identifiant local d'un site peut correspondre à un identifiant global d'interface. L'information indiquée dans ce champ peut alors comprendre deux types d'information :
∘ une adresse du routeur PE sur lequel l'interface se trouve, et
∘ un identifiant de l'interface visée au sein du routeur PE.

Les informations contenues dans les messages d'annonce de route sont utilisées pour mettre à jour les tables de routage par interface.

Une table de routage d'un routeur de bordure, selon un mode de réalisation, indique pour chaque interface gérée au niveau du routeur de bordure, comment joindre des sites distants du VPN considéré. Une entrée d'une table de routage peut indiquer une association des informations suivantes:
- <site destination>, <interface destination>

Plus précisément, dans un mode de réalisation, l'information <site destination> n'est connue que de façon locale par le VPN alors que l'information <interface destination> est reconnue de façon unique dans le réseau de l'opérateur. Cette association permet de déterminer l'interface par laquelle il convient de passer pour joindre un site donné. Ainsi, dans ce cas, c'est au niveau local d'un routeur PE que l'on traduit un identifiant d'interface en identifiant le réseau distant ou site de destination qui correspond à cette interface.

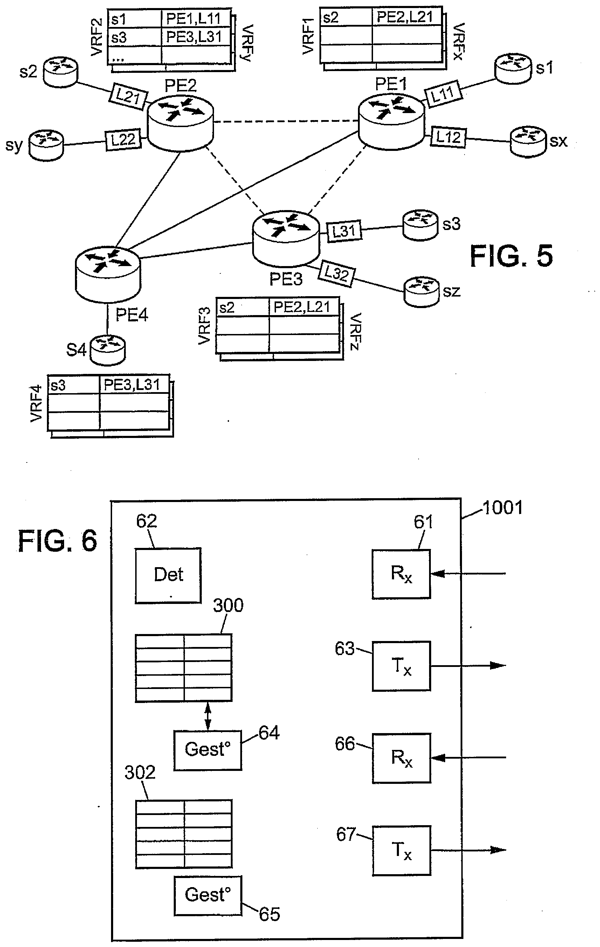

Dans un mode de réalisation, chaque routeur de bordure PE gère une table de topologie et une table de routage. La figure 5 illustre en détail un exemple de mise en œuvre de ces tables de topologie et de routage dans une configuration d'un système 100 selon un mode de réalisation de la présente invention. Deux topologies respectives de VPN sont ici représentées. Le système 100 comprend des routeurs de bordure PE1, PE2, PE3 et PE4.

Un premier VPN-A comprend des réseaux distants S1, S2, S3 et S4. Un second VPN-B comprend des réseaux distants Sx, Sy et Sz. Le routeur de bordure PE1 connecte au système 100 d'une part le réseau distant S1 du VPN-A et d'autre part le réseau distant Sx du VPN-B. Le routeur de bordure PE2 connecte au système 100 d'une part le réseau distant S2 du VPN-A et d'autre part le réseau distant Sy du VPN-B. Le routeur de bordure PE3 connecte au système 100 d'une part le réseau distant S3 du VPN-A et d'autre part le réseau distant Sz du VPN-B. Le routeur de bordure PE4 connecte au système 100 d'une part le réseau distant S4 du VPN-A.

Le routeur PE1 gère une table de topologie pour le réseau VPN-A indiquant la liste de routeurs de bordure adjacents (PE2, PE3, PE4) et les identifiants de réseau distant correspondants. On rappelle ici qu'un identifiant de réseau distant identifie une entité de gestion du routeur de bordure en charge d'une interface avec le réseau distant. Le routeur PE1 gère une table de topologie 300 pour le réseau VPN-B indiquant la liste de routeurs de bordure adjacents (PE2, PE3) et les identifiants de réseau distant correspondants.

Le routeur PE2 gère une table de topologie pour le réseau VPN-A indiquant la liste de routeurs de bordure adjacents (PE1, PE3, PE4) et les identifiants de réseau distant correspondants. Le routeur PE2 gère une table de topologie pour le réseau VPN-B indiquant la liste de routeurs de bordure adjacents (PE1, PE3) et les identifiants de réseau distant correspondants.

Le routeur PE3 gère une table de topologie pour le réseau VPN-A indiquant la liste de routeurs de bordure adjacents (PE1, PE2, PE4) et les identifiants de réseau distant correspondants. Le routeur PE2 gère une table de topologie pour le réseau VPN-B indiquant la liste de routeurs de bordure adjacents (PE1, PE3) et les identifiants de réseau distant correspondants.

Le routeur PE4 gère une table de topologie pour le réseau VPN-A indiquant la liste de routeurs de bordure adjacents (PE1, PE2, PE3) et les identifiants de réseau distant correspondants.

Les tables de topologie ne sont pas représentées sur la figure 5.

Le routeur PE1 gère une table de routage, comme dans un réseau BGP/MPLS de type VRF (pour 'Virtual Routing and Forwarding Table'), VRF1 pour le VPN-A et une table de routage VRFx de type VRF pour le VPN-B. Le routeur PE2 gère une table de routage VRF2 pour le VPN-A et une table de routage VRFy pour le VPN-B. Le routeur PE3 gère une table VRF3 de routage pour le VPN-A et une table VRFz de routage pour le VPN-B. Le routeur PE4 gère une table de routage VRF4 pour le VPN-A.

Par la suite, seules les tables relatives au VPN-A sont représentées et décrites.

La table VRF1 du routeur PE1 indique une route pour atteindre le réseau distant S2 depuis le réseau distant S1, en la paire (PE2, L21), où PE2 représente un label MPLS du routeur de bordure PE2 et L21 est un label interne au routeur PE2 qui identifie l'interface de sortie vers le site S2, représentant une route pour atteindre S2 depuis PE2. Tel peut être le cas lorsque les tunnels virtuels de la topologie des VPNs sont créés sur la base d'une technologie de type MPLS.

La table VRF2 indique une route pour atteindre le réseau distant S1 via la paire (PE1, L11), où PE1 représente un label MPLS du routeur de bordure PE1 et L11 est un label interne au routeur PE1 qui identifie l'interface de sortie vers le site S1, représentant une route pour atteindre S1 depuis PE1. Elle indique également une route pour atteindre le réseau distant S3 via le lien (PE3, L31), où L31 est une route pour atteindre S3 depuis PE3.

La table VRF3 indique une route pour atteindre le réseau distant S2 via la paire (PE2, L21), où PE2 représente un label MPLS du routeur de bordure PE2 et L21 est un label interne au routeur PE2 qui identifie l'interface de sortie vers le site S2, représentant une route pour atteindre S2 depuis PE2.

La table VRF4 indique une route pour atteindre le réseau distant S3 via la paire (PE3, L31).

Dans un tel contexte, par exemple lorsqu'un paquet arrive dans le système 100 depuis le réseau distant S2 à destination du réseau distant S1 dans le VPN-A, il est d'abord reçu par le routeur PE2. Le routeur PE2 route ce paquet selon les informations stockées dans sa table VRF2 qui indique à cet effet la paire (PE1, L11).

Il convient de noter que le VPN-B repose sur les routeurs de bordure PE1 à PE3. Ainsi, avantageusement, lorsqu'une annonce de route est reçue pour le VPN-B, par le routeur PE2 par exemple, elle est transmise aux routeurs de bordure adjacents à ce routeur PE2 qui sont listés dans sa table de topologie correspondante, c'est-à-dire les routeurs PE1 et PE3 et les identifiants de réseau distant correspondants, mais elle n'est pas transmise au routeur PE4 qui lui ne fait pas partie du VPN-B considéré.

De telles tables permettent de garantir que les différents VPNs sont isolés les uns des autres au sein d'un même système de transmission. Elle permet également une indépendance de l'adressage par VPN. En effet, chaque VPN peut joindre librement ses équipements et ses sites et est responsable de la cohérence de son adressage. Un VPN peut même utiliser des adresses qui appartiennent à l'espace des adresses privées, c'est-à-dire non routables.

On peut noter qu'au sein du réseau, les paquets sont routés sur la base de tables de routage de cœur du réseau. Ces tables de cœur de réseau peuvent être mises à jour sur la base d'un protocole de type IGP (pour 'Interior Gateway Protocol') comme par exemple un protocole à états de liens comme le protocole ISIS (pour 'Intermediate System to Intermediate System') ou OSPF (pour 'Open Shortest Path First'). Toutefois, aucune limitation n'est attachée au protocole de ce type utilisé au sein du système pour le réseau.

La figure 6 illustre un routeur de bordure selon un mode de réalisation de la présente invention.

Le routeur de bordure comprend :
- une unité de réception 61 adaptée pour détecter un changement de route depuis un réseau distant dudit réseau virtuel donné ;
- une unité de détermination 62 adaptée pour déterminer un ou plusieurs routeurs de bordure adjacents et les identifiants de réseau distant correspondants pour ledit réseau virtuel sur la base de la table de topologie ; et
- une unité de transmission 63 adaptée pour transmettre le changement de route auxdits routeurs de bordure adjacents, en indiquant les identifiants de réseau distant déterminés.

Le routeur de bordure peut comprendre une unité de gestion de topologie 64 adaptée pour gérer la table de topologie d'un réseau virtuel en la mettant à jour selon un protocole de topologie en fonction de la configuration dudit réseau virtuel. La table de topologie pour un réseau virtuel est ainsi mise à jour selon un protocole de topologie en fonction de la configuration dudit réseau virtuel. Le protocole de topologie comprend un signal de diffusion de topologie indiquant un routeur de bordure par lequel ledit réseau distant est connecté au système de transmission et un identifiant de réseau distant correspondant.

Ce routeur de bordure peut comprendre une unité de gestion 65 de routage adaptée pour gérer une table de routage par réseau virtuel indiquant des informations de chemins disponibles pour transmettre des paquets vers les réseaux distants dudit réseau virtuel, la table de routage étant mise à jour sur détection d'un changement de route, ledit changement de route indiquant si un chemin est à ajouter, supprimer ou modifier dans la table de routage.

Le routeur de bordure peut être adapté pour recevoir et gérer un changement de route reçu depuis un réseau distant est selon un protocole de type PE-CE comme par exemple BGP, ISIS, OSPF etc ...

Le routeur de bordure peut en outre comprendre une autre unité de réception 66 qui est adaptée pour recevoir des annonces de route depuis un réseau distant ou bien un autre routeur de bordure, et une autre unité de transmission 67 qui est adaptée pour transmettre les annonces de route reçues aux routeurs de bordure adjacents pour le VPN concerné et les identifiants de réseau distant correspondants.

## Revendications

1. Procédé de routage dans un système de transmission comprenant une pluralité de routeurs de bordure ;
ledit système gérant une pluralité de réseaux virtuels, chacun reliant plusieurs réseaux distants entre eux ;
un routeur de bordure gérant une table de routage par réseau virtuel et une table de topologie, la table de routage indiquant des informations de chemin disponibles pour transmettre des paquets vers les réseaux distants dudit réseau virtuel et la table de topologie indiquant, pour un réseau virtuel donné, un ou plusieurs routeurs de bordure adjacents et pour un routeur de bordure adjacent, au moins un identifiant de réseau distant ;
ledit procédé comprenant les étapes suivantes au niveau dudit rouleur de bordure :
/a/ détecter (201) un changement de route relative à un réseau distant dudit réseau virtuel donné ;
/b/ sur la base de la table de topologie, déterminer (202) pour ledit réseau virtuel, un ou plusieurs routeurs de bordure adjacents et le ou les identifiants de réseau distant correspondants ; et
/c/ transmettre (203) le changement de route auxdits routeurs de bordure adjacents, en indiquant le ou les identifiants de réseau distant déterminés.

2. Procédé de routage selon la revendication 1, dans lequel la table de topologie pour un réseau virtuel est mise à jour selon un protocole de topologie en fonction de la configuration dudit réseau virtuel,
ledit protocole de topologie comprenant un signal de diffusion de topologie indiquant un routeur de bordure (1001) par lequel ledit réseau distant est connecté au système de transmission et l'identifiant de réseau distant correspondant (31-34).

3. Procédé de routage selon la revendication 1, dans lequel la table de routage est mise à jour sur réception d'un changement de route transmis par un autre routeur de bordure, ledit changement de route indiquant si un chemin est à ajouter, supprimer ou modifier dans la table de routage.

4. Routeur de bordure (1001) dans un système de transmission (100) comprenant une pluralité de routeurs de bordure ;
ledit système gérant une pluralité de réseaux virtuels, chacun reliant plusieurs réseaux distants entre eux ;
un routeur de bordure gérant une table de routage par réseau virtuel et une table de topologie, la table de routage indiquant des informations de chemin disponibles pour transmettre des paquets vers les réseaux distants dudit réseau virtuel et la table de topologie indiquant, pour un réseau virtuel donné, un ou plusieurs routeurs de bordure adjacents et pour un routeur de bordure adjacent, au moins un identifiant de réseau distant ;
ledit routeur de bordure comprenant :
- une unité de réception (61) adaptée pour détecter un changement de route relative à un réseau distant dudit réseau virtuel donné ;
- une unité de détermination (62) adaptée pour déterminer, pour le réseau virtuel, un ou plusieurs routeurs de bordure adjacents et les identifiants de réseau distant correspondants sur la base de la table de topologie ; et
- une unité de transmission (63) adaptée pour transmettre le changement de route auxdits routeurs de bordure adjacents, en indiquant les identifiants de réseau distant déterminés.

5. Routeur de bordure (1001) selon la revendication 4, comprenant une unité de gestion de topologie (64) adaptée pour gérer la table de topologie d'un réseau virtuel en la mettant à jour selon un protocole de topologie en fonction de la configuration dudit réseau virtuel, la table de topologie pour un réseau virtuel est mise à jour selon un protocole de topologie en fonction de la configuration dudit réseau virtuel, ledit protocole de topologie comprenant un signal de diffusion de topologie indiquant un routeur de bordure par lequel ledit réseau distant est connecté au système de transmission et un identifiant de réseau distant correspondant (31-34).

6. Routeur de bordure (1001) selon la revendication 4, comprenant une unité de gestion de routage (65) adaptée pour gérer une table de routage par réseau virtuel indiquant des informations de chemins disponibles pour transmettre des paquets vers les réseaux distants dudit réseau virtuel, la table de routage étant mise à jour sur réception d'un changement de route transmis par un autre routeur de bordure, ledit changement de route indiquant si un chemin est à ajouter, supprimer ou modifier dans la table de routage.

7. Système de transmission (100) comprenant une pluralité de routeurs de bordure selon la revendication 4.

8. Programme d'ordinateur comportant des instructions pour la mise en œuvre du procédé selon la revendication 1 lorsque ce programme est exécuté par un processeur.

9. Signal de diffusion de topologie dans un système de transmission (100) selon la revendication 7, dans lequel chaque routeur de bordure gère une table de topologie indiquant, pour un réseau virtuel donné, un ou plusieurs routeurs de bordure adjacents et, pour un routeur de bordure adjacent, au moins un identifiant de réseau distant ;
ledit signal de diffusion de topologie émis par un routeur de bordure indiquant, pour chaque réseau distant directement connecté audit routeur de bordure, un identifiant (LE11) dudit réseau distant.

## Patentansprüche

1. Routingverfahren in einem Übertragungssystem, das eine Vielzahl von Edge-Routern enthält;
wobei das System eine Vielzahl virtueller Netze verwaltet, die je mehrere entfernte Netze miteinander verbinden;
wobei ein Edge-Router eine Routingtabelle pro virtuellem Netz und eine Topologietabelle verwaltet, wobei die Routingtabelle verfügbare Weginformationen angibt, um Pakete zu den vom virtuellen Netz entfernten Netzen zu übertragen, und die Topologietabelle für ein gegebenes virtuelles Netz einen oder mehrere benachbarte Edge-Router und für einen benachbarten Edge-Router mindestens eine Kennung eines entfernten Netzes angibt;
wobei das Verfahren die folgenden Schritte im Bereich des Edge-Routers enthält:
/a/ Erfassen (201) einer Routenänderung bezüglich eines vom gegebenen virtuellen Netz entfernten Netzes;
/b/ auf der Basis der Topologietabelle, Bestimmen (202), für das virtuelle Netz, eines oder mehrerer benachbarter Edge-Router und der entsprechenden Kennung oder Kennungen eines entfernten Netzes; und
/c/ Übertragen (203) der Routenänderung an die benachbarten Edge-Router, unter Angabe der bestimmten Kennung oder Kennungen eines entfernten Netzes.

2. Routingverfahren nach Anspruch 1, wobei die Topologietabelle für ein virtuelles Netz gemäß einem Topologieprotokoll abhängig von der Konfiguration des virtuellen Netzes aktualisiert wird,
wobei das Topologieprotokoll ein Topologieausstrahlungssignal enthält, das einen Edge-Router (1001), durch den das entfernte Netz mit dem Übertragungssystem verbunden ist, und die entsprechende Kennung eines entfernten Netzes (31-34) angibt.

3. Routingverfahren nach Anspruch 1, wobei die Routingtabelle nach Empfang einer von einem anderen Edge-Router übertragenen Routenänderung aktualisiert wird, wobei die Routenänderung angibt, ob ein Weg zur Routingtabelle hinzuzufügen, aus ihr zu entfernen oder zu ändern ist.

4. Edge-Router (1001) in einem Übertragungssystem (100), das eine Vielzahl von Edge-Routern enthält;
wobei das System eine Vielzahl virtueller Netze verwaltet, die je mehrere entfernte Netze miteinander verbinden;
wobei ein Edge-Router eine Routingtabelle pro virtuellem Netz und eine Topologietabelle verwaltet, wobei die Routingtabelle verfügbare Weginformationen angibt, um Pakete zu den vom virtuellen Netz entfernten Netzen zu übertragen, und die Topologietabelle für ein gegebenes virtuelles Netz einen oder mehrere benachbarte Edge-Router und für einen benachbarten Edge-Router mindestens eine Kennung eines entfernten Netzes angibt;
wobei der Edge-Router enthält:
- eine Empfangseinheit (61), die geeignet ist, eine Routenänderung bezüglich eines vom gegebenen virtuellen Netz entfernten Netzes zu erfassen;
- eine Bestimmungseinheit (62), die geeignet ist, für das virtuelle Netz einen oder mehrere benachbarte Edge-Router und die entsprechenden Kennungen eines entfernten Netzes auf der Basis der Topologietabelle zu bestimmen; und
- eine Übertragungseinheit (63), die geeignet ist, die Routenänderung unter Angabe der bestimmten Kennungen eines entfernten Netzes an die benachbarten Edge-Router zu übertragen.

5. Edge-Router (1001) nach Anspruch 4, der eine Topologieverwaltungseinheit (64) enthält, die geeignet ist, die Topologietabelle eines virtuellen Netzes zu verwalten, indem sie sie gemäß einem Topologieprotokoll abhängig von der Konfiguration des virtuellen Netzes aktualisiert, die Topologietabelle für ein virtuelles Netz wird gemäß einem Topologieprotokoll abhängig von der Konfiguration des virtuellen Netzes aktualisiert,
wobei das Topologieprotokoll ein Topologieausstrahlungssignal enthält, das einen Edge-Router, durch den das entfernte Netz mit dem Übertragungssystem verbunden ist, und eine Kennung eines entsprechenden entfernten Netzes (31-34) angibt.

6. Edge-Router (1001) nach Anspruch 4, der eine Routingverwaltungseinheit (65) enthält, die geeignet ist, eine Routingtabelle pro virtuelles Netz zu verwalten, die Informationen über verfügbare Wege angibt, um Pakete zu den vom virtuellen Netz entfernten Netzen zu übertragen, wobei die Routingtabelle bei Empfang einer von einem anderen Edge-Router übertragenen Routenänderung aktualisiert wird, wobei die Routenänderung angibt, ob ein Weg zur Routingtabelle hinzuzufügen, aus ihr zu entfernen oder zu ändern ist.

7. Übertragungssystem (100), das eine Vielzahl von Edge-Routern nach Anspruch 4 enthält.

8. Computerprogramm, das Anweisungen zur Durchführung des Verfahrens nach Anspruch 1 aufweist, wenn dieses Programm von einem Prozessor ausgeführt wird.

9. Topologieausstrahlungssignal in einem Übertragungssystem (100) nach Anspruch 7, wobei jeder Edge-Router eine Topologietabelle verwaltet, die für ein gegebenes virtuelles Netz einen oder mehrere benachbarte Edge-Router und für einen benachbarten Edge-Router mindestens eine Kennung eines entfernten Netzes angibt;
wobei das von einem Edge-Router gesendete Topologieausstrahlungssignal für jedes direkt mit dem Edge-Router verbundene entfernte Netz eine Kennung (LE11) des entfernten Netzes angibt.

## Claims

1. A method of routing in a transmission system comprising a plurality of border routers;
said system managing a plurality of virtual networks, each linking together several mutually remote networks;
a border router managing a routing table per virtual network and a topology table, the routing table indicating, path information available for transmitting packets to the remote networks of said virtual network and the topology table indicating, for a given virtual network, one or more adjacent border routers and for an adjacent border router, at least one remote network identifier; said method comprising the following steps at the level of said border router:
/a/ detecting (201) a change of route relating to a remote network of said given virtual network;
/b/ on the basis of the topology table, determining (202) for said virtual network, one or more adjacent border routers and the corresponding remote network identifier or identifiers; and
/c/ transmitting (203) the change of route to said adjacent border routers, while indicating the determined remote network identifier or identifiers.

2. The routing method of claim 1, in which the topology table for a virtual network is updated according to a topology protocol as a function of the configuration of said virtual network,
said topology protocol comprising a topology broadcasting signal indicating a border router (1001) by which said remote network is connected to the transmission system and the corresponding remote-network identifier (31-34).

3. The routing method of claim 1, in which the routing table is updated on receipt of a change of route transmitted by another border router, said change of route indicating whether a path should be added, deleted or modified in the routing table.

4. A border router (1001) in a transmission system (100) comprising a plurality of border routers;
said system managing a plurality of virtual networks, each linking together several mutually remote networks;
a border router managing a routing table per virtual network and a topology table, the routing table indicating path information available for transmitting packets to the remote networks of said virtual network and the topology table indicating, for a given virtual network, one or more adjacent border routers and for an adjacent border router, at least one remote network identifier; said border router comprising:
- a reception unit (61) adapted for detecting a change of route relating to a remote network of said given virtual network;
- a determination unit (62) adapted for determining, for the virtual network, one or more adjacent border routers and the corresponding remote-network identifiers on the basis of the topology table; and
- a transmission unit (63) adapted for transmitting the change of route to said adjacent border routers, while indicating the determined remote-network identifiers.

5. The border router (1001) of claim 4, comprising a topology management unit (64) adapted for managing the topology table of a virtual network by updating it according to a topology protocol as a function of the configuration of said virtual network, the topology table for a virtual network being updated according to a topology protocol as a function of the configuration of said virtual network, said topology protocol comprising a topology broadcasting signal indicating a border router by which said remote network is connected to the transmission system and a corresponding remote-network identifier (31-34).

6. The border router (1001) of claim 4, comprising a routing management unit (65) adapted for managing a routing table per virtual network indicating path information available for transmitting packets to the remote networks of said virtual network,
the routing table being updated on receipt of a change of route transmitted by another border router, said change of route indicating whether a path should be added, deleted or modified in the routing table.

7. A transmission system (100) comprising a plurality of border routers according to claim 4.

8. A computer program comprising instructions for the implementation of the method of claim 1 when the program is executed by a processor.

9. A topology broadcasting signal in a transmission system (100) of claim 7, in which each border router manages a topology table indicating, for a given virtual network, one or more adjacent border routers and, for an adjacent border router, at least one remote-network identifier;
said topology broadcasting signal sent by a border router indicating, for each remote network connected directly to said border router, an identifier (LE11) of said remote network.
